Europäisches Patentamt

European Patent Office

Office européen des brevets

(19)

(11) Publication number: **0 273 471 B1**

## EUROPEAN PATENT SPECIFICATION

(12)

(45) Date of publication of patent specification: **05.08.92**    (51) Int. Cl.5: **E21B 33/13**, E21B 43/25

(21) Application number: **87202235.5**

(22) Date of filing: **16.11.87**

(54) **Aqueous composition for universal spacer and its use in the field of drilling wells notably oil and gas wells.**

(30) Priority: **28.11.86 FR 8616786**

(43) Date of publication of application:
**06.07.88 Bulletin 88/27**

(45) Publication of the grant of the patent:
**05.08.92 Bulletin 92/32**

(84) Designated Contracting States:
**DE GB IT NL**

(56) References cited:
**EP-A- 0 079 997**
**EP-A- 0 207 536**
**US-A- 4 304 300**

(73) Proprietor: **PUMPTECH N.V.**
**Atlantic House Noorderlaan 147 Bus 5C**
**B-2030 Antwerpen(BE)**

(72) Inventor: **Guillot, Dominique**
**75, rue Jean-Baptiste David**
**F-42100 St-Etienne(FR)**
Inventor: **Parcevaux, Philippe**
**15, rue du 29 Brumaire**
**F-42100 St-Etienne(FR)**
Inventor: **Jennings, David B.**
**6, Ashdown**
**Maidenhead Berkshire SL 68 HN(GB)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

EP 0 273 471 B1

## Description

The present invention concerns the technology of separation fluids used in completion of oil or other wells; these "slug fluids" are designated hereafter by the term "spacer" universally used

A spacer is a fluid used, notably, in cementing operations,which is pumped between the drilling mud and the cement slurry destined to replace it. The spacer is indispensable to prevent the mud coming into contact with the cement slurry, these two "fluids" being chemically incompatible. In addition, the spacer having properties which help mud elimination from the walls of the well, contributes generally to the removal and ejection of drilling mud.

A spacer generally consists of a fluid of aqueous base to which has been added a particulate weighting agent, to increase its density to the desired value,and to increase its erosional effect on the "mud cake" subsisting on the walls of formations crossed by the bore.

The aqueous base fluid should itself have several fundamental properties bearing a direct relationship to its composition : stability of the particles in suspension ("anti-settling" properties), fluid loss control, rheology,compatibility with muds and cement slurries.

Consequently, the spacer bases known to the previous state of the art are composed of at least i) an anti-settling agent ii) a fluid loss control agent iii) a dispersing agent.

Significant progress was made by the indications of French patent application FR-A-2 582 664 (EP-A-0 207 536) which describes an aqueous spacer consisting of anti-settling, fluid loss control and dispersing agents of particular type, and having particular properties.

In accordance with this patent application, the anti-settling agent is a biopolymer, preferably obtained by fermentation of the bacterium Azotobacter Indicus. The fluid loss control agent being an anionic polymer of high molecular weight - between 500 000 and 10 000 000 - preferably belonging to the polystyrene or polyvinyltoluene-sulfonate families. The dispersing agent consists of a low molecular weight - 5 000 to 100 000 - anionic polyelectrolyte, belonging to the polystyrene-sulfonate family.

When the spacer described above is used in presence of an oil based mud, it also comprises a surface-active agent - HLB value between 7 and 15 - and preferably a polyethoxyle ester of a C9 - C12 fatty acid.

The present invention concerns a universal spacer composed of two principal parts i) a gelling agent, and ii) at least one fluid loss control agent, the nature of which is determined according to the salinity of the aqueous base system.

In accordance with the invention the system can be used with any basic water, which is to say it can be fresh or sea water, or brines and its salinity may be modified up to saturation with NaCl and KCl.

One of the major advantages of the system is that, simply by varying the concentration of component (i) it can be pumped in plug flow or in turbulent flow. In accordance with the invention it can be used at temperatures of up to 150 °C and its density may vary between 1.05 and 2.4 g/cm³.

The spacer system of this invention has the decisive advantage, over that described in French patent application FR-A-2 582 664, of great flexibility of use, and also the advantage of using fewer products thus lowering the cost, whilst improving performance, especially in saline environments. This improved performance being achieved particularly by virtue of the system's good compatibility with certain salt water based muds. It will be noted that, not only does the new system behave favourably under all conditions of salinity (i.e. strong or weak saline concentrations) and with fresh water, but equally well in plug or turbulent flow.

A spacer having such a complete range of properties, enabling use in practically all configurations of operations in the field, without special precautions and thus with less risk in well treatment, has actually no equivalent in the oil field services industry.

As indicated above the first component of the new system is a gelling agent.

The function of this gelling agent is twofold : firstly, to hold the weighting agent in suspension both when at rest, during surface preparations and under shearing conditions during pumping, and secondly, to control the rheology of the spacer depending on the nature of flow, its velocity profile or clearly defined pressure drops.

The gelling agent (i) must be compatible with all types of mixing waters, ranging from fresh water to saturated solutions of salts such as NaCl or KCl, including sea water and those brines locally available in the field, possibly highly contaminated by Ca and Mg. When a highly salinated water is used, a preliminary hydration of the gelling agent must be carried out in the base water (fresh water, brines, sea water) and the salt (NaCl or KCl) added afterwards (a soaking time of 30 minutes is sufficient for hydration)

In accordance with the invention the gelling agent itself is composed of a mixture of a biopolymer and a polyelectrolyte of the polynaphthalene sulfonate type. The preferred biopolymer is a derivative of the Azotobacter Indicus bacterium. The dispersing agent, of the polynaphthalene sufonate type, improves the compatibility of the gelling agent with those cement slurries likely to cause the most problems, such as are indicated in table 1 below.

The function of the biopolymer, as indicated above, is essentially to hold the weighting agent in suspension and to control the rheology of the fluid. Excellent properties of suspension are obtained once the biopolymer to base water concentration exceeds 2 g/l.

Note that the polynaphthalene sulfonate (PNS) in itself has no action on the rheology of the spacer.

The ratio of biopolymer to PNS type dispersing agent can vary between 1 : 0 and 1 : 3, the preferred ratio being 1 : 2 to 1 : 1.

The gelling agent confers a certain fluid loss controlling property on the spacer. This property is secondary but becomes increasingly emphasized as the concentration of the gelling agent increases and, in such a case, the best fluid loss control is obtained in highly salinated waters.

The behaviour, according to the power law, with a very low behaviour index, $n(0.2 - 0.35)$, is characteristic of a flat velocity profile for the fluid, corresponding to plug flow, irrespective of the flow rate. Additionally, when the gelling agent is used in weak concentration in the water, of the order of 10g/l or even less, the resulting spacer can also be pumped easily in turbulent flow. Thus, a decisive advantage of the invented system is that it presents only two types of characteristic flow - plug and turbulent - which are known for their efficiency in correctly displacing drilling mud, without passing through any significant phase of laminar flow.

In heavily salinated waters the gelling agent in itself provides an excellent spacer in either plug or turbulent flow, giving good control over fluid loss without the need for a specific controlling agent.

The flow is effectively of sub-laminar or plug type whatever the flow rate, but also that turbulent flow is achieved even at low flow rates. The flow of the invented spacers never being laminar in the strict sense of the term (parabolic velocity profile). This is a very original characteristic, essential to the properties sought.

A commercially available example of biopolymer is Kelco Rotary (Merck and Co) "Biozan".

Non-limitative examples of polynaphthalene sulfonates include : Lomar D,K,L3,MS,W,DLSF, from Diamond Shamrock; Daxad 19 and 19L from W.R.Grace; Dispolene D and G from the company Seppic; Polymer QR-819 from Rohm and Haas and Pluradyne CD 98 from the firm BASF.

As fluid loss control agents, cellulose derivatives of the hydroxyethyl-, carboxymethyl- and carboxymethyl-hydroxyethyl-cellulose type, as well as the hyroxypropylmethyl-celluloses may be cited.

One of the essential aspects of the invention, however, resides in in the selection of propylmethylcellulose derivatives having a high cloud point ($>70$ ° C), as fluid loss control agent.

Previously, in the article described in EP-A-0079997 and on the contrary to that described here, the search was for a low cloud point, which, while favouring the onset of turbulence, provoked instability phenomena (precipitation, unstable flow).

In accordance with the present invention, hydropropyl-methyl-celluloses having a high cloud point (at least 70 ° C) are particularly recommended as giving excellent fluid loss control - less than 80 ml/30 min.- with minimum influence on spacer rheology, and this even at very low concentrations - 2g/l for example.

In a saline environment the problem of fluid loss control is less important because, as previously said, the gelling agent itself endows the spacer with the satisfactory properties in this respect.

Nevertheless, in cases where very good fluid loss control is necessary, for example when a highly permeable zone is encountered, - particularly when using turbulent flow, as any loss of fluid into the formation results in undesirable modification of spacer rheology. In this case fluid loss control agents consisting of high molecular weight (300 000 to 1 000 000) polystyrene sulfonates could be used. A polystyrene sulfonate of molecular weight of around 500 000 being a good agent of this type, such as, for example, the product Versa TL 500 sold by the National Adhesives and Resins company. Another example of a preferred fluid loss control agent would be a mixture of a high molecular weight polystyrene sulfonate, such as Versa TL 500, and a polystyrene sulfonate of low molecular weight, such as Versa TL 70, preferably in the ratio 1:2 by weight. Such a composition allows an improvement in compatibility with the most problematic of salt water based drilling muds (cf table 7), without destroying the rheology of the spacer or its fluid loss controling properties.

The preferred weighting agent will be barium hydroxide, but for details of the design of the spacer we will refer to French patent application FR-A-2 582 664 the contents of which are incorporated here by reference. In this way the spacer can be weighted with barium hydroxide - up to 1.55g/l - and the weighting complemented by hematite or ilmenite in order to achieve the finally desired density.

Optimal spacer properties are obtained if the gelling agent is first hydrated in the base water - whether this be fresh or sea water or a brine - before addition of the salt (NaCl or KCl), as described in US-A-4 104 193. The use of a water containing large quantities of already dissolved salts is possible however, provided that either the gelling agent concentration is increased by at least 50%, or that the spacer be mixed and pumped continuously.

An anti-foam agent will always be used when mixing the components. This being of the polyglycol type, such as Dow Chemical Company Polyglycol 4 000, if the spacer is mixed with a weakly saline water. With strongly saline waters (above 10% equivalent of NaCl), polyglycols are no longer effective and silicone emulsions, such as polyorganosiloxanes, are used instead. The Dow Corning company product DB 31 can be used for example.

Finally when the spacer is used in presence of an oil based mud, a surface active agent will be incorporated before pumping into the well, as described in the previously cited French patent. This agent having HLB value of between 7 and 15 (HLB - hydrophile-lipophile balance), is used in the concentration of 10 to 40 litres per cubic meter of spacer.

## Claims

1. Spacer composition of the type containing :
   - water
   - a biopolymer
   - a polyelectrolyte of the polynaphtalene-sulfonate type (PNS), and
   - a fluid loss control agent
     charaterized in that :
   - the said fluid loss control agent consists of a cellulose derivative having a cloud point of at least 70° C.

2. Spacer according to claim 1, characterized in that the said cellulose derivative is hydroxypropylcellulose or propylmethylcellulose derivatives with a cloud point of at least 70° C.

3. Spacer according to claim 1 or 2, characterized in that the ratio biopolymer/PNS is 1:0 to 1:3 preferably 1:2 to 1:1.

4. Spacer according any one of claims 1 to 3 characterized in that the concentration of biopolymer in the water is at least 2 g/l.

5. Spacer according any one of claims 1 to 4 characterized in that in further contains a polyelectrolyte consisting of at least one polystyrene-sulfonate.

6. Spacer according to any one of claims 1 to 5, characterized in that the said biopolymer is a derivative of the Azobacter Indicus Bacterium.

7. Use of the spacers according to any one of claims 1 to 6 in the treatment of oil, gas, water or geothermal wells and analogous applications.

## Revendications

1. Fuide intercalaire (ou "spacer") du type contenant :
   - de l'eau,
   - un biopolymère,
   - un polyélectrolyte du genre polynaphtalène-sulfonate (PNS) et
   - un agent de contrôle des pertes de fluides,
     ledit fluide étant caractérisé en ce que l'agent de contrôle des pertes de fluides consiste en en dérivé de la cellulose ayant un point de trouble d'au moins 70°C.

2. Fluide intercalaire selon la revendication 1 caractérisé en ce que le dérivé de la cellulose est un dérivé de l'hydroxypropyl-cellulose ou de la propyl-méthylcellulose ayant un point de trouble d'au moins 70°C.

3. Fluide intercalaire selon l'une des revendications 1 et 2, caractérisé en ce que le rapport du biopolymère au PNS est compris entre 1:0 et 1:3, de préférence entre 1:2 et 1:1.

4. Fluide intercalaire selon l'une quelconque des revendications 1 à 3, caractérisé en ce que la concentration de l'eau en biopolymère est d'au moins 2 g/litre.

5. Fluide intercalaire selon l'une quelconque des revendications 1 à 4, caractérisé en ce qu'il contient en outre un polyélectrolyte qui consiste en au moins un polystyrène-sulfonate.

6. Fluide intercalaire selon l'une quelconque des revendications 1 à 5, caractérisé en ce que le biopolymère est un dérivé de la bactérie Azobacter indicus.

7. Application des fluides intercalaires selon l'une quelconque des revendication 1 à 6 dans le traitement de puits de pétrole, de gaz ou d'eau ou de puits géothermiques et dans des emplois analogues.

## Patentansprüche

1. Zusammensetzung eines Abstandshalters des Typs, enthaltend:
   - Wasser
   - ein Biopolymer

- ein Polyelektrolyt des Polynaphtalin-Sulfonat Typs (PNS) und
- ein Flüssigeitsverlust-Kontrollmittel,
     **dadurch gekennzeichnet,** daß:
- das Flüssigeitsverlust-Kontrollmittel aus einem, einen Trübungspunkt von wenigstens 70°C besitzenden Cellulose-Derivat besteht.

2. Abstandshalter nach Anspruch 1,
     **dadurch gekennzeichnet,** daß das Cellulose-Derivat Hydroxypropylcellulose oder Propylmethylcellulosose-derivate, mit einem Trübungspunkt von wenigstens 70°C ist.

3. Abstandshalter nach Anspruch 1 oder 2,
     **dadurch gekennzeichnet,** daß das Verhältnis Biopolymer/PNS 1:0 bis 1:3, vorzugsweise 1:2 bis 1:1 beträgt.

4. Abstandshalter nach einem der Ansprüche 1 bis 3,
     **dadurch gekennzeichnet,** daß die Konzentration des Biopolymers im Wasser wenigstens 2g/L beträgt.

5. Abstandshalter nach einem der Ansprüche 1 bis 4,
     **dadurch gekennzeichnet,** daß es weiter ein Polyelektrolyt, das aus wenigstens einem Polystyrol-Sulfonat besteht, enthält.

6. Abstandshalter nach einem der Ansprüche 1 bis 5,
     **dadurch gekennzeichnet,** daß das Biopolymer ein Derivat des Bakterium Azobacter Indicus darstellt.

7. Verwendung des Abstandshalters nach einem der Ansprüche 1 bis 6, bei der Behandlung von Öl-, Gas-, Wasser- oder geothermischen Schächten oder analogen Anwendungen.